# EUROPÄISCHE PATENTANMELDUNG

(11) **EP 2 401 901 A1**
(43) Veröffentlichungstag der Anmeldung: **04.01.2012**
(21) Anmeldenummer: 11401533.2
(22) Anmeldetag: 23.06.2011
(51) Int. Cl.: A01B 61/04

(54) **Scherbolzensicherungselement**

(30) Priorität: 01.07.2010 DE 102010017685; 22.07.2010 DE 102010036558
(71) Anmelder: Amazonen-Werke H. Dreyer GmbH & Co. KG, 49205 Hasbergen (DE)
(72) Erfinder: Pollex, Jorg, 04229 Leipzig (DE)

(57) **Zusammenfassung**

Scherbolzensicherungselement (4) für insbesondere in in den Boden eingreifenden Bodenbearbeitungswerkzeuge von landwirtschaftlichen Maschinen, wobei dem Scherbolzen (5) des Scherbolzensicherungselementes (4) zumindest ein ihn umgebendes Polster- und/oder Federelement (6) zugeordnet ist. Um eine einfache Montage des Polster- und/oder Federelementes (6) der Scherbolzensicherung zu schaffen, ist vorgesehen, dass das Polster- und/oder Federelement (6) von einer Innen- und/oder einer Außenhülse umgeben ist, dass die Innenhülse unmittelbar auf dem Scherbolzen angeordnet.

## Beschreibung

Die Erfindung betrifft ein Scherbolzensicherungselement gemäß des Oberbegriffes des Patentanspruches 1.

Ein derartiges Scherbolzensicherungselement ist durch die DE 694 23 739 T2 bekannt. Dieses Scherbolzensicherungselement wird bei einem Pflugbalken eingesetzt. Das Polster- und/oder Federelement des Scherbolzensicherungselementes ist direkt auf dem Scherbolzen angeordnet. Die Montage dieses Polster-und/oder Federelementes auf dem Scherbolzen und in der Bohrung der Scherbolzensicherung ist nur mit Montagemitteln möglich, weil das Polster- und/oder Federelement mit einer gewissen Vorspannung montiert werden müssen, damit das Polster- und oder Federelement die Kraftspitzen abfedern können.

Der Erfindung liegt die Aufgabe zu Grunde, eine einfache Montage des Polster- und/oder Federelementes der Scherbolzensicherung zu schaffen.

Diese Aufgabe wird erfindungsgemäß dadurch gelöst, dass das Polster- und/oder Federelement von einer Innen- und/oder einer Außenhülse umgeben ist, dass die Innenhülse unmittelbar auf dem Scherbolzen angeordnet ist. Infolge dieser Maßnahmen lässt sich das Polster- und/oder Federelement mit einer gewissen Vorspannung zwischen der Innen- und/oder Außenhülse anordnen, so dass das Polster- und/oder Federelement beim Auftreffen des Bodenbearbeitungswerkzeuges auf im Boden festsetzenden Hindernisse die Kraftspitzen abfedern kann, so dass die Scherbolzensicherung erst bei übermäßig großen und das Bodenbearbeitungswerkzeug oder die Maschine beschädigende Kräfte ausgelöst wird, d.h. dass der Scherbolzen erst dann abschert.

Um die Montage des Scherbolzensicherungselementes zu vereinfachen, so dass die Teile beim Montagevorgang nicht auseinanderfallen, ist vorgesehen, dass die Innen- und/oder Außenhülse materialschlüssig mit dem Polster- und/oder Federelement verbunden sind.

Eine einfache Herstellung der Innen- und/oder Außenhülse lässt sich dadurch erreichen, dass die Innen- und/oder Außenhülse aus einem harten Kunststoffmaterial oder Metall bestehen.

Weitere Einzelheiten der Erfindung sind der Beispielsbeschreibung und den Zeichnungen zu entnehmen. Hierbei zeigen
- Fig. 1: ein Bodenbearbeitungswerkzeug mit Scherbolzensicherung in Seitenansicht,
- Fig. 2: die Befestigung des Bodenbearbeitungswerkzeuges mit dem Scherbolzensicherungselement in der Ansicht IIII im vergrößerten Maßstab,
- Fig. 3: das Scherbolzensicherungselement in der Darstellung gemäß Fig. 2 im vergrößerten Maßstab,
- Fig. 4: das Scherbolzensicherungselement gemäß Fig. 3 in Seitenansicht,
- Fig. 5: die Anordnung eines weiteren Scherbolzensicherungselementes in der Darstellungsweise nach Fig. 2,
- Fig. 6: das Scherbolzensicherungselement in der Darstellung gemäß Fig. 5 im vergrößerten Maßstab und

- Fig. 7: das Scherbolzensicherungselement gemäß Fig. 6 in Seitenansicht.

Das Bodenbearbeitungswerkzeug 1 von landwirtschaftlichen Maschinen ist über die oberen, nur teilweise dargestellten Haltelaschen 2 an dem nicht dargestellten Rahmen eines Bodenbearbeitungsgerätes angeordnet. Die Befestigungsmittel des Bodenbearbeitungswerkzeuges 1 an den Haltelaschen 2 bestehend aus dem Schwenkbolzen 3 und dem Scherbolzensicherungselement 4 mit dem Scherbolzen 5. Das Bodenbearbeitungswerkzeug 1 dringt zur Bodenbearbeitung in den Boden ein.

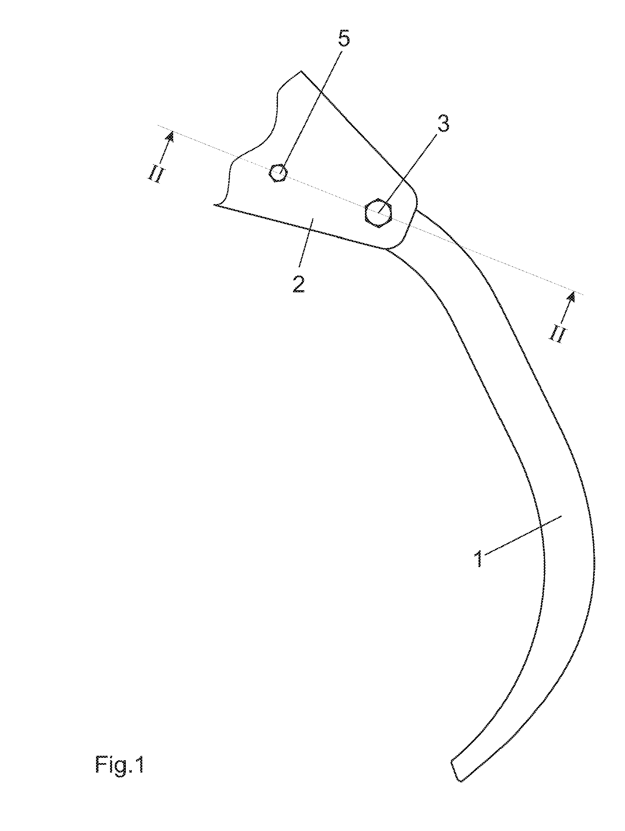

Das elastische Scherbolzensicherungselement 4 weist ein Polster- und/oder Federelement 6 auf. Das Polster- und/oder Federelement 6 ist von einer Innen- 7 und einer Außenhülse 8 umgeben. Die Innen- 7 und Außenhülse 8 sind materialschlüssig mit dem Polster- und/oder Federelement 6 verbunden. In dem Ausführungsbeispiel gemäß den Fig. 1-4 besteht das Polster-und/oder Federelement 6 aus einem Gummi- oder elastische Kunststoffmaterial.

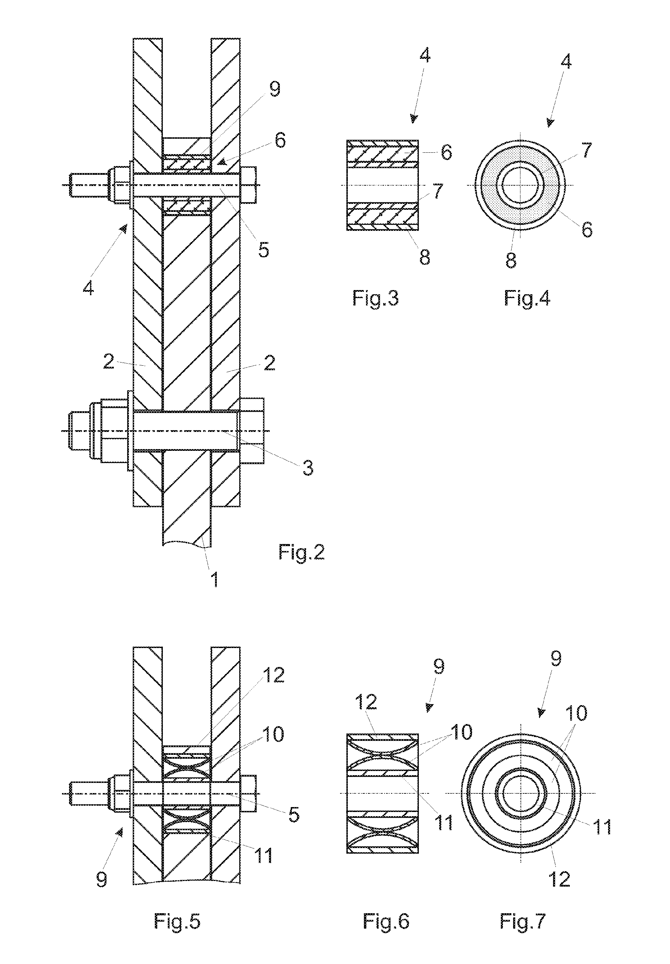

Die Innenhülse 7 ist passgenau unmittelbar auf dem Scherbolzen 5 angeordnet, wie Fig. 2 zeigt. Die Außenhülse 8 ist passgenau in der im oberen Bereich des
Bodenbearbeitungswerkzeuges 1 angeordneten Bohrung 9 angeordnet.

Durch die Anordnung des Polster- und/oder Federelementes 6 zwischen der Innen- 4 und Außenhülse 8 lässt sich das elastische Scherbolzensicherungselement 4 in einfacher Weise auf dem Scherbolzen 5 und in der sie in dem
Bodenbearbeitungswerkzeuge 1 befindenden Bohrung anordnen.

Die Funktionsweise der Scherbolzensicherung mit dem Polster - und/oder Federelement 6 ist folgende:
Wenn der untere Bereich des Bodenbearbeitungswerkzeuges 1 auf dem Boden festsitzende Hindernisse auf trifft, kann das Bodenbearbeitungswerkzeug 1 aufgrund der Elastizität des Polster- und/oder Federelementes 6 des
Scherbolzensicherungselementes 4 etwas nach hinten ausweichen, so dass die jeweilige große Kraftspitze abgebaut wird. Somit trifft nicht die volle Auftreffkraft auf den Scherbolzen 5, so dass der Scherbolzen 5 in vielen Fällen in nicht abschert. Vielmehr springt oder gleitet dann das Bodenbearbeitungswerkzeug 1 und somit die Maschine über das im Boden festsetzende Hindernis hinweg.

Die Ausgestaltung des Scherbolzensicherungselementes 9 gemäß dem Fig. 5-7 unterscheidet sich von dem
Scherbolzensicherungselement 4 gemäß den Fig. 2-4 dadurch, dass anstelle eines aus Gummi- oder elastischen Kunststoffmaterial bestehenden Polster- und/oder Federelementes 6 gewölbte Stahlfedern 10, wie die Fig. 5 und 6 zeigen, zwischen der Innen- 11 und Außenhülse 12 eingesetzt werden.

## Patentansprüche

1. Scherbolzensicherungselement für insbesondere in den Boden eingreifenden Bodenbearbeitungswerkzeuge von landwirtschaftlichen Maschinen, wobei dem Scherbolzen des Scherbolzensicherungselementes zumindest ein ihn umgebendes Polster- und/oder Federelement zugeordnet ist, **dadurch gekennzeichnet, dass** das Polster- und/oder Federelement (6,10) von einer Innen- und/oder einer Außenhülse (8,12) umgeben ist, dass die Innenhülse (7,11) unmittelbar auf dem Scherbolzen angeordnet.

2. Scherbolzensicherungselement nach Anspruch 1, **dadurch gekennzeichnet, dass** die Innen- (7) und/oder Außenhülse (8) materialschlüssig mit dem Polster- und/oder Federelement (6) verbunden sind.

3. Scherbolzensicherungselement nach zumindest einem der vorstehenden Ansprüche, **dadurch gekennzeichnet, dass** die Innen- (7,11) und/oder Außenhülse (8,12) aus einem harten Kunststoffmaterial oder Metall bestehen.
